# EUROPEAN PATENT APPLICATION

(11) **EP 4 261 349 A1**
(43) Date of publication of application: **18.10.2023**
(21) Application number: 23167938.2
(22) Date of filing: 14.04.2023
(51) Int. Cl.: E02D 27/42, B66C 1/44, B66C 1/56, E02D 27/52, F16L 1/15, F16L 1/20

(54) **GRIPPING ASSEMBLY**

(30) Priority: 14.04.2022 IT 202200007553
(71) Applicant: F.Lli Righini S.r.l., 48122 Ravenna (IT)
(72) Inventor: RIGHINI, Renzo, 48121 Ravenna (IT); ARGELLI , Franco, 48121 Ravenna (IT)
(74) Representative: Roncuzzi, Davide

(57) **Abstract**

A gripping assembly (1) for a pile (CP) provided with a longitudinal axis (AL) and axially delimited by a longitudinal end (LE) having a given shape, by a first shell (IM) and by a second shell (EM) which delimit the longitudinal end (LE) from the inside and from the outside, respectively; the assembly (1) comprising a frame (10) provided with a central portion (12) shaped to support a plurality of linear actuators (20) about a central axis (120), where each linear actuator (20) is provided with a stem (24) carried by the central portion (12) having a radial orientation, and with an armature (22) that terminates with a free end (220) which carries the grasping means (30) designed to radially couple with at least one of the first shell (IM) and second shell (EM) of the end (LE) of the pile (CP); the central portion (12) carrying a plurality of arms (14) which extend radially around the central axis (12); each arm (14) being provided with a radial guide (140) to which the grasping means (30) are coupled in a freely slidable manner.

## Description

The present invention relates to a gripping assembly. In particular, the present invention relates to an assembly for gripping piles through a respective end portion. In more detail, the present invention refers to an assembly for gripping piles through a respective end portion, the assembly being provided with a central portion provided with a plurality of grasping members.

### DESCRIPTION OF THE STATE OF THE ART

In the field of construction of marine or, more generally, aquatic wind power plants, it is known to use steel piles to support the generator towers. These piles are submerged after being taken from the deck of a first transport ship, moored in the installation area, by a gripping assembly carried by a crane installed on a second operating ship moored alongside the first one. In particular, the piles are arranged stacked on the transport ship with the respective longitudinal axis substantially horizontal, and the gripping assembly is equipped with a plurality of grasping members, each of which is arranged to couple by friction with the inner and/or outer shell of the piles to be handled. In fact, it should be noted that the piles for this type of installation are generally of two types: piles provided with a flanged end designed to define a support base for the base of the generator tower and piles that terminate with a conical end. The piles of the first type are grasped by using gripping members that are carried by a central portion of the gripping assembly in such a way as to be radially movable; once the crane has carried the gripping assembly with the central portion arranged with the respective central axis horizontal and the gripping members facing the flanged end of the pile radially below the inner face of the flange, they are inserted inside the flanged end until they have exceeded the flange. At this point, the gripping members are actuated radially until the radial end thereof contacts the inner shell of the pile and then begin the lifting thereof until it is completely vertical. From what is described, in this condition all the gripping members will be arranged below the flange, ensuring that the pile is stably suspended until it is deemed useful. In the case of other piles, the gripping takes place once the gripping members are in contact with the inner shell of the pile in a position spaced from the free end, and the conicity of the pile will ensure the stability of the grip, provided that the gripping members remain locked to the diameter of the shell area at the longitudinal height where the grip was made, therefore the pressure on the shell is kept circumferentially homogeneous and constant.

It is easily understood that the two types of gripping members interface well exclusively with the piles for which the respective gripping assembly was designed. From what has been described above, it will not be possible to work on piles of a conical type if the gripping assembly is designed to work on flanged piles, where the load is always safe due to the presence of the flange, whereas the opposite might be possible although it is not operationally optimal.

Therefore, to operate on piles of each of the two types described above it will be necessary that the crane, to be used for the relative handling, is equipped with a suitable gripping assembly; in the opposite case, it will have to be re-equipped at each format change, but it is understood that, in addition to being required to do a particularly strenuous task for this operation, given that the crane supports the gripping assembly by means of cables, an adequate space will also have to be reserved for the replacement gripping assembly, and it is well understood that this also represents an operational complication for the person who has to manage the space on board, which is always in short supply in ships involved in the laying of piles and, more generally working ships, so it must also be organized with great precision also to avoid jeopardizing the safe operation of the respective workers. A technical solution for gripping pipes from the inside is described in the patent application EP3473775. According to the teachings of this patent, the gripping device comprises a frame provided with three columns arranged at the vertices of an equilateral triangle; the three columns slidably carry an upper platform, a middle platform and a lower platform. A plurality of grasping members, the distance of which from the central axis is adjustable radially through a linear actuator carried radially by the central platform; the upper and lower platforms are movable relative to the central platform through the linear actuators parallel to the columns. Each grasping member corresponds to a cylindrical plate having a given diameter that is carried by an armature connected to the upper and lower platforms through two rocker arms acting as tie rods, which keep it constantly parallel to the columns. Each armature has a seat that passes through the respective cylindrical plate for the corresponding gripping member, which can be operated to and from the respective plate through the respective radial actuator. It is easily understood that the gripping device is particularly cumbersome axially and that the presence of the cylindrical plate limits the number of gripping members. It follows from this that the supporting force of the pipe exerted by the gripping members is concentrated in a limited number of respective peripheral areas; therefore, if the pipe is of limited thickness, has a large radius and particularly large longitudinal extension, it is easily deformed during the handling operations. Therefore, the solution presented by the patent EP '775 has a very limited field of application unless the risk of deformation is accepted. In view of the situation described above, it is desirable to have a gripping assembly that, in addition to limiting and possibly overcoming the drawbacks typical of the known state of the art, can be selectively equipped quickly and efficiently, so that it is possible to grasp and lift flanged or conical piles in complete safety, avoiding the complications that entail replacing the assembly with one of a different type.

### SUMMARY OF THE PRESENT INVENTION

The present invention relates to a gripping assembly. In particular, the present invention relates to an assembly for gripping piles through a respective end portion. In more detail, the present invention refers to an assembly for gripping piles through a respective end portion, the assembly being provided with a central portion provided with a plurality of grasping members.

The drawbacks described above are solved by the present invention according to at least one of the following claims.

According to some embodiments of the present invention a gripping assembly is implemented for a pile provided with a longitudinal axis and axially delimited by a longitudinal end having a given shape, by a first shell and by a second shell which delimit the longitudinal end from the inside and from the outside, respectively; said assembly comprising a frame provided with a central portion shaped to support a plurality of linear actuators about a central axis, where each linear actuator is provided with a stem carried by said central portion having a radial orientation, and with an armature coupled axially to said stem that terminates with a free end which carries gripping means designed to radially couple with at least one of said first shell and said second shell of said end of said pile; said central portion carrying a plurality of arms which extend radially around said central axis; each arm being provided with a radial guide to which said grasping means are coupled in a freely slidable manner.

According to an embodiment as described above, said grasping means comprise a slide which is provided with a slot shape-coupled in a freely slidable manner to said radial guide and is provided with a front abutment for said first shell.

According to an embodiment as described above, each said actuator is designed to hydraulically actuate said armature so that said slide is movable, in use, between a first position in which said front abutment is arranged within said first shell and free from the first shell and a second position in which said front abutment is in contact with said first shell.

According to an embodiment as described above, said longitudinal end has an annular flange concentric with said longitudinal axis in such a way that, locally, said first shell is shaped like a step; said flange being delimited internally by a cylindrical face concentric with said longitudinal axis; said flange being delimited at the top by a first face and at the bottom by a second face connected by said cylindrical face; said slide comprising a concave coupling member which has a bottom portion provided with said front abutment and from which a first tooth and a second tooth radially extend, facing each other; said first tooth internally having a first abutment transversal to said longitudinal axis and said second tooth being delimited internally by a second abutment transversal to said longitudinal axis, said first abutment and said second abutment being reciprocally opposing in order to couple, respectively, with said first face and said second face, and being spaced in the direction of said longitudinal axis at a distance greater than the distance between said first face and said second face. According to an embodiment as described above, said first tooth externally has said slot, said first abutment and said second abutment being coated with a low friction and pressure deformable material.

According to an embodiment as described above, each said actuator is designed to hydraulically actuate said armature so that said slide is movable between a first position in which said second tooth is arranged within said cylindrical face and a second position in which said front abutment is in contact with said cylindrical face. According to a possible constructive variation of the present invention as described above, said slide comprises a grasping member provided with a bottom portion in which said slot is obtained; said grasping member furthermore comprising a first inner plate and a second outer plate facing each other, which extend parallel starting from said bottom portion; said first plate being coupled to said armature; each of said first and second plates carrying a linear actuator provided with a respective vice clamping element to tighten said longitudinal end through the respective first and second shells; said clamping element of said inner plate incorporating said front abutment.

According to an embodiment as described above, said frame is of a star-shaped type and has the respective said arms uniformly arranged about said central axis.

According to an embodiment as described above, said assembly comprises a support member coupled to said central portion through the interposition of a bearing coaxial to said central axis.

According to an embodiment as described above, said arms are at least 6 in number.

### BRIEF DESCRIPTION OF THE FIGURES

Further characteristics and advantages of the gripping assembly according to the present invention will become clear from the following description, set forth with reference to the attached figures which illustrate at least one non-limiting embodiment thereof, in which identical or corresponding parts of the gripping assembly are identified by the same reference numbers.

In particular:
- Figure 1 is a schematic perspective view of a first preferred embodiment of a gripping assembly according to the present invention supporting a pile of which only a respective portion subject to gripping is visible;
- Figure 2 is a partially exploded view on a reduced scale of Figure 1;
- Figure 3 is a side elevation view on a reduced scale of the gripping assembly of Figure 1;
- Figure 4 is a front view on a reduced scale of the gripping assembly of Figure 1;
- Figure 5 is a rear view on a reduced scale of the gripping assembly of Figure 1;
- Figure 6 is a schematic perspective view of a detail of Figure 4 on an enlarged scale 4;
- Figures 7-10 represent a succession of 4 operating conditions of a detail of Figure 3 on an enlarged scale;
- Figure 11 is a schematic perspective view of a second preferred embodiment of a gripping assembly according to the present invention supporting a pile of which only a respective portion subject to gripping is visible;
- Figure 12 is a schematic three-dimensional view of a detail of Figure 11 represented on an enlarged scale;
- Figure 13 is a schematic three-dimensional view of a first detail of Figure 12 represented on an enlarged scale; and
- Figure 14 is a schematic three-dimensional view of a second detail of Figure 12 represented on an enlarged scale and partially sectioned.

### DETAILED DESCRIPTION OF THE PRESENT INVENTION

Before describing in detail the preferred embodiments of the present invention or details thereof, it is considered useful to specify that the relative scope is not limited to the particular embodiments described hereinafter. The disclosure and description in the present document are illustrative and explanatory of one or more currently preferred embodiments and variations, and it will be clear to the experts of the art that various changes in design, organization, order of operation, operating means, equipment structures and position, methodology, and use of mechanical equivalents may be made without thereby being extraneous to the spirit of the invention.

In addition, it should be understood that the attached figure drawings have the purpose of clearly illustrating and disclosing embodiments currently preferred by one of the experts of the field, but they are not drawings that illustrate how these embodiments should be carried out in reality or actual representations of final products; instead, these figures can comprise simplified conceptual views to aid understanding or allow to provide an easier and faster explanation. In addition, the relative size and arrangement of the components may differ from those shown and still function within the spirit of the invention.

On the other hand, it is understood that various directions such as "top," "bottom," "left," "right," "front," "back," and so on are used only with respect to the explanation in combination with the drawings, and that the components may be oriented differently, for example, during transportation and production as well as during operation. As many different and distinct embodiments can be made within the scope of the concepts taught herein, and as there are many changes that can be made to the embodiments described herein, it must be understood that the details provided hereinafter must be interpreted as illustrative and not limiting the spirit of the invention.

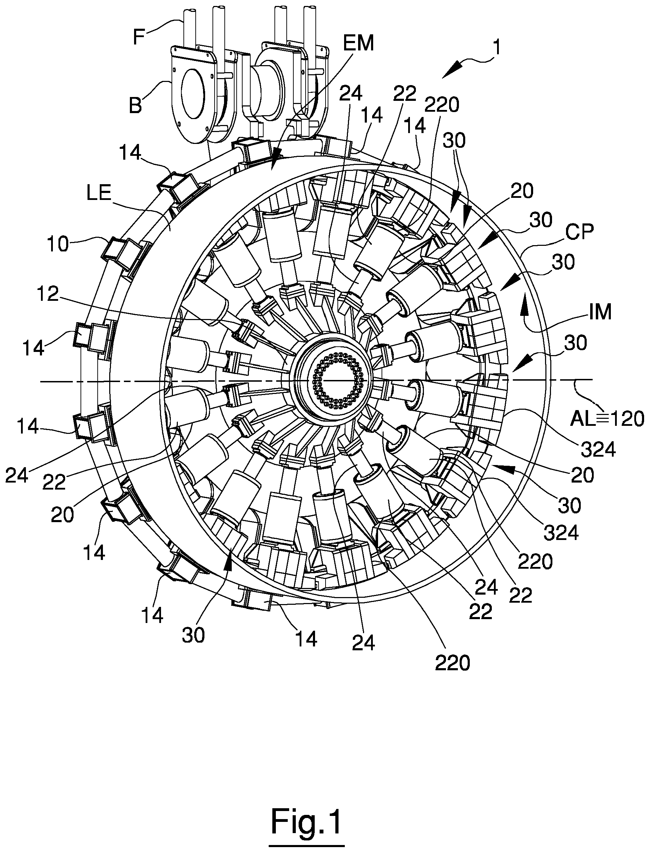

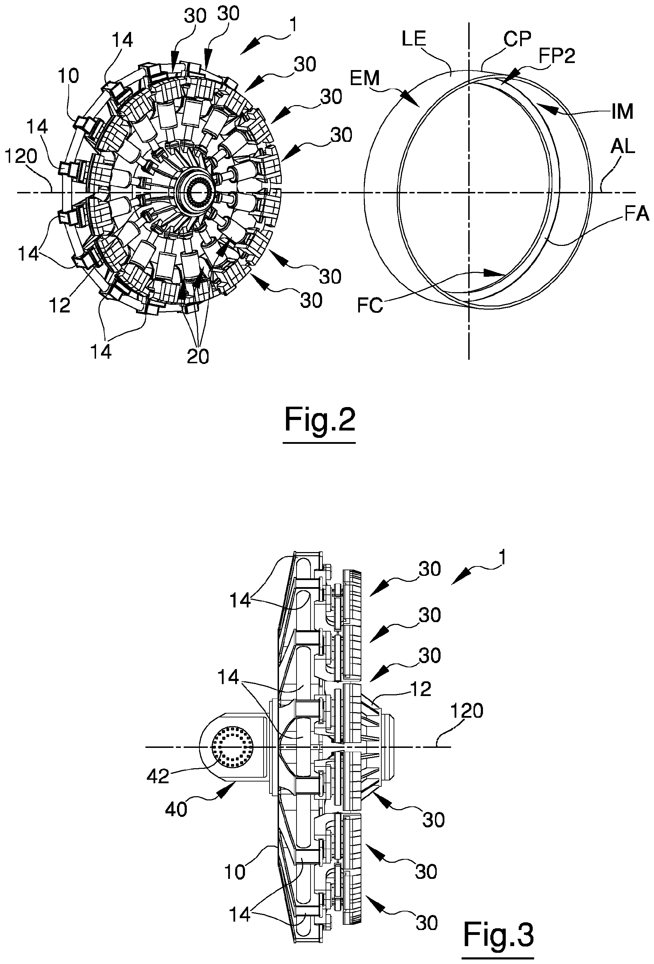

In Figure 1, 1 denotes, as a whole, a gripping assembly 1 for a pile CP (better seen in Figure 2) provided with a longitudinal axis AL and delimited axially by a longitudinal end LE having a given shape, which, as will be seen, is used for handling the pile CP. This end is delimited internally by a first shell IM and externally by a second shell EM.

For economy of design in Figure 1, only the part of the longitudinal end LE of the pile CP is shown.

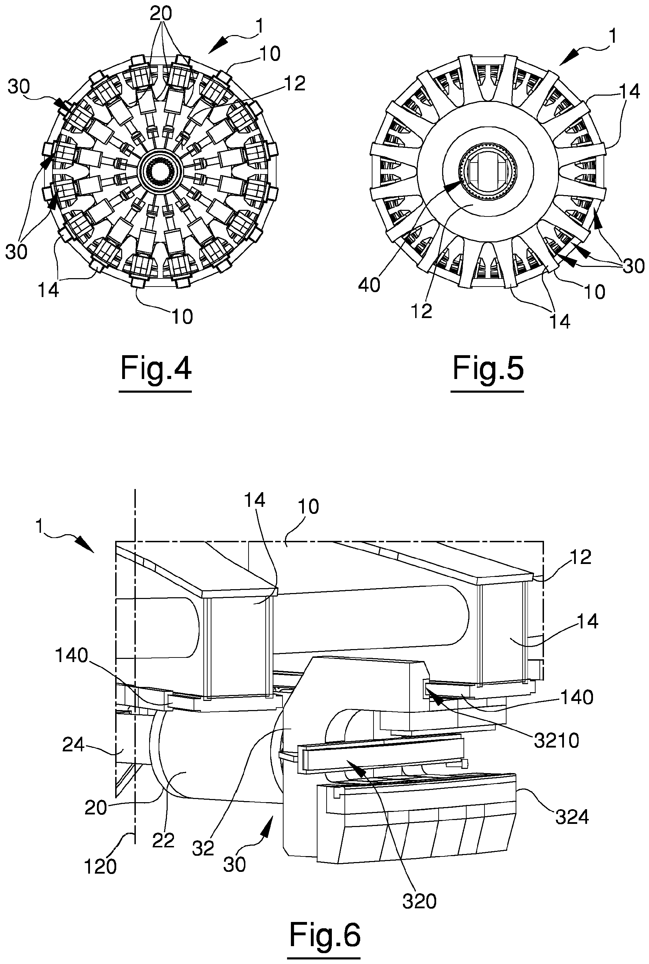

Again with reference to Figure 1, the assembly 1 comprising a frame 10 provided with a central portion 12 that develops around a central axis 120 and is arranged to be supported by a crane, known and not illustrated, through a hoist of which only the block B is shown coupled to a support member 40 (visible in Figures 3 and 5) coupled to the central portion 12 in a freely rotatable manner through the interposition of a bearing 42 coaxial to the central axis 120 and the rope F that is wound around the block B . The central portion 12 rigidly carries a plurality of arms 14 which extend radially around the central axis 120 (from Figures 1 and 5 and from the first paragraph of page 19). A linear actuator 20 carried radially from the central portion 12 through the end of a respective stem 24 corresponds to each of the arms 14. Each actuator 20 also comprises an armature 22 that is axially coupled to the stem 24 and terminates with a free end 220 (Figure 1), which, in turn, carries a grasping unit 30 designed to couple radially with at least one of the first shell IM and second shell EM of the end LE. In particular, with reference to Figure 6, each arm 14 is provided with a radial guide 140 (best seen in Figure 6) to which the grasping unit 30 is coupled in a freely slidable manner. It should be noted that, if deemed useful, each actuator can be mounted upside down, therefore with the stem 24 and the armature 22 coupled to the grasping unit 30 and to the central portion 12, respectively, achieving a technical equivalent of the solution illustrated in the attached figures which, therefore, falls within the scope of the present invention.

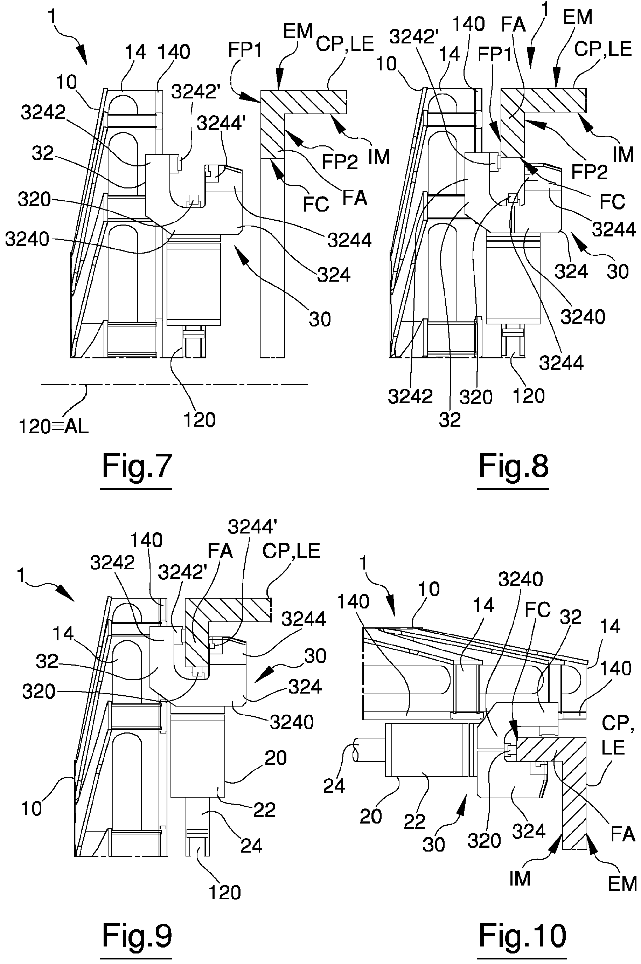

The grasping unit 30 comprises a slide 32 that is provided with a slot 3210 that is shape-coupled in a freely slidable manner to the radial guide 140 and is provided with a front abutment 320 that is shaped to interact with the first shell IM and, in particular, is parallel to the central axis 120 and, in use, also to the longitudinal axis AL of the pile CP. In this regard, each actuator 20 is designed to hydraulically actuate the respective armature 22 so that the slide 32 is movable, in use, between a first position in which the front abutment 320 is free from the longitudinal end LE and arranged within the first shell IM and a second position in which the front abutment 320 is arranged in contact with the first shell IM (Figures 7-10) .

As specified above, the longitudinal end LE of the pile CP can be flanged or conical and flangeless. As will be seen, the gripping assembly 1 can be equipped with a grasping unit 30 designed to interact with piles CP the longitudinal end LE of which is flanged or conical.

In the first case, the end LE comprises an end flange FA for the longitudinal end LE, annularly flat and concentric with the longitudinal axis AL such that, locally, the first shell IM is shaped like a step. In particular, the flange FA is locally delimited internally by a portion of the first shell IM, in particular of the respective step shaped portion, comprising a cylindrical face FC which, therefore, is concentric with the longitudinal axis AL. In addition, the flange FA is delimited at the top by a first flat face FP1 and at the bottom by a second flat face FP2 orthogonal to the longitudinal axis AL and connected by the cylindrical face FC. In some cases, the flange FA has the respective first face FP1 slightly conical.

With particular reference to Figures 1-3 and 6-10, each slide 32 comprises a concave coupling member 324 that has a bottom portion 3240 provided with the front abutment 320 and from which a first tooth 3242, which in this case is part of the slide 32, and a second tooth 3244 extend radially, the two teeth facing each other. If deemed useful, the front abutment 320 can be outwardly concave. With particular reference to Figures 7-10, the first tooth 3242 internally has a first abutment 3242' transverse to the longitudinal axis AL, and the second tooth 3244 is delimited internally by a second abutment 3244' transverse to the longitudinal axis AL; in addition, the first abutment 3242' and second abutment 3244' are mutually opposite to couple with the first face FP1 and the second face FP2, respectively, and are spaced apart by a distance greater than the distance between the first face FP1 and second face FP2 in the direction of the longitudinal axis AL.

Again, with particular reference to Figures 7-10, the slot 3210 is obtained in the outer portion of the first tooth 3242, the front abutment 320 and at least one of the first abutment 3242' and second abutment 3244' is coated with a low friction and pressure deformable material to interact with the first shell IM and with the flange FA preventing surface damage on the contact surfaces (first shell IM and/or second shell EM). The material used for the coating could be bronze without thereby limiting the scope of the present invention.

With particular reference to Figures 7-10, each actuator 20 is designed to hydraulically actuate the respective armature 22 in such a way that the slide 32, and therefore the respective coupling member 324, is movable between a first position in which the second tooth 3244 is arranged inside the cylindrical face FC (Figures 7 and 8) and a second position in which the front abutment 320 is in contact with the cylindrical face FC (Figures 9 and 10). Naturally, Figures 7-9 represent a situation in which the pile CP to be grasped is arranged lying down with the respective longitudinal axis AL substantially horizontal, while in Figure 10 the pile CP is arranged with the respective longitudinal axis AL substantially vertical, ready to be lowered into the sea for respective installation. The reason why the adverb "substantially" has been used here above depends on the fact that in both situations the pile is aboard a ship, in the first case lying on the respective deck and in the second case grasped by the gripping assembly 1 which is, precisely, hanging from a crane that is aboard a work ship, therefore in both cases it is not likely to be in a horizontal or vertical position due to the albeit slight wave motion.

The use of the gripping assembly 1 is easily understood from what has been described above and requires no further explanation.

However, it may be useful to specify that the choice of using hydraulic actuators 20 allows for easy homogenization of the level of pressure exerted on the portions of the cylindrical face FC of the flange FA by the front abutments 320 of the coupling members 324, given that the gripping assembly 1 is hanging from the ropes of a crane, known and not illustrated. The possibility of applying moderate levels of pressure to the longitudinal end LE of the piles CP is instead related to the particular shape of the frame 10 and the number of the arms 14 that extend radially from the central portion 12. In the version illustrated in the attached figures, it can be seen that the frame 10 is of the star-shaped type and has sixteen arms 14 that extend rigidly from the central portion 12 and are evenly distributed around the central axis 120 (with particular reference to Figures 1 and 5).

Naturally, the greater the number of coupling members 324, and therefore the number of front abutments 320, the lower the aliquot of pressure exerted by each of the latter on the flange FA through the respective cylindrical face FC; consequently, the lower the risk that the shape of the longitudinal end LE will undergo deformations or be damaged during handling of the pile CP performed through the gripping assembly 1 on the ground and, above all, in the marine installation area even when it is necessary to act in operating conditions disturbed by wind and wave motion of significant intensity. Naturally, the greater the number of coupling members 324, and therefore the actuators 20 and the respective arms 14, the more complex the design/construction of the frame 10 will be, given that it will be more complicated to find space for all the necessary coupling members 324 and the actuators 20.

In addition, it may be useful to specify that also the piles CP provided with flange FA and the longitudinal end LE of which is conical are handled through the gripping assembly 1 equipped with grasping members 324.

Lastly, it is clear that modifications and variations can be made to the gripping assembly 1 described and illustrated herein without thereby departing from the scope of the present invention.

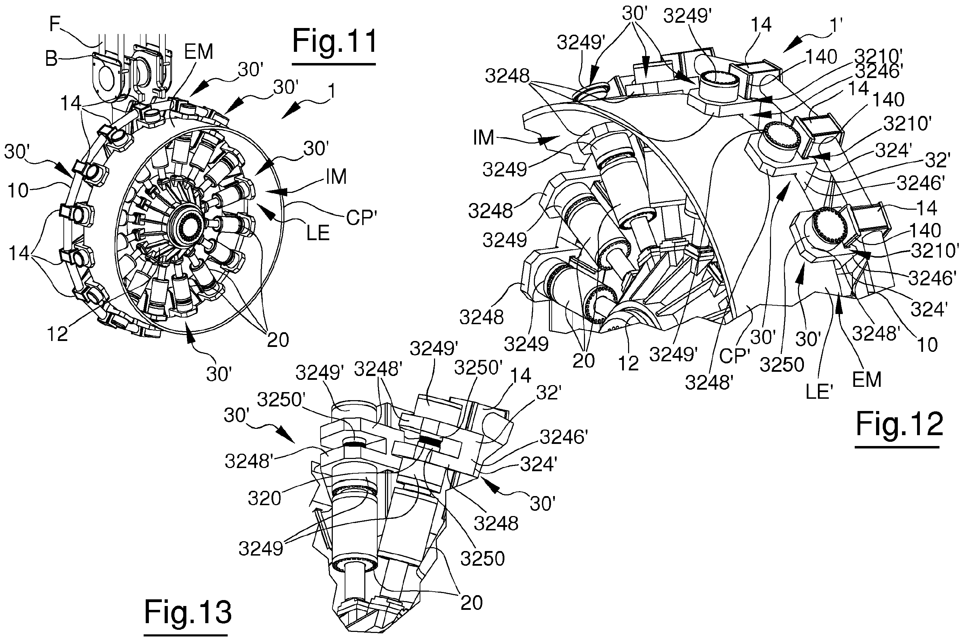

In particular, with reference to Figures 11 and 12, the gripping assembly 1 can be modified into the gripping assembly distinguished by the reference number 1' and to be equipped with the slides 32' modified for grasping the piles CP' the longitudinal end LE' of which is conical and has no flange FA and, therefore, must be handled more carefully due to the lack of circumferential reinforcement.

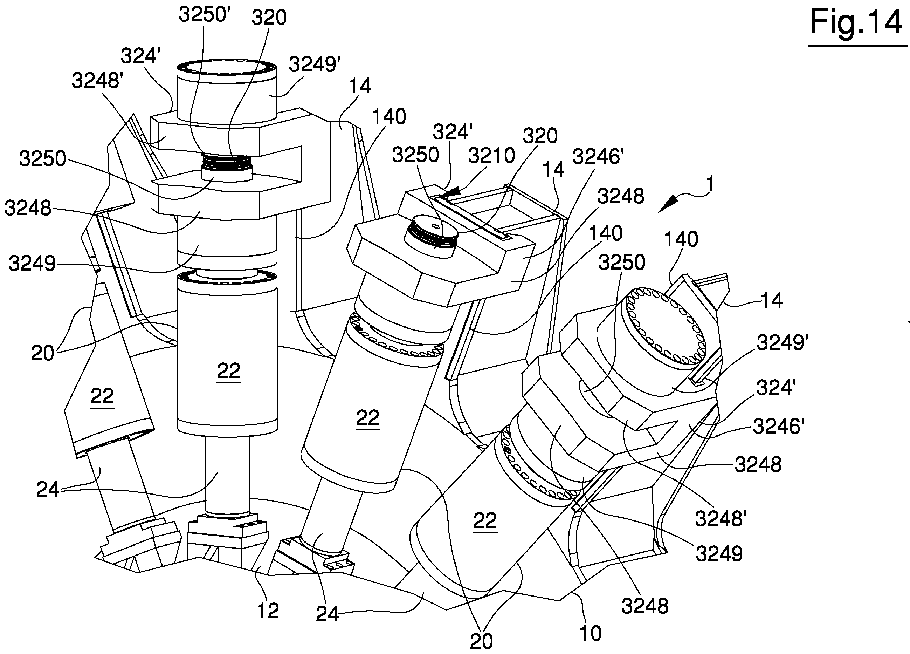

In particular, with reference to Figures 12-14, each slide 32' is part of a grasping unit 30' that comprises a grasping member 324' provided with a bottom portion 3246' in which the slot 3210' is obtained. The respective grasping member 324' comprises, in particular, a first inner plate 3248 and a second outer plate 3248' facing each other, which extend parallel starting from the bottom portion 3246'. The first plate 3248 is coupled to the armature 22; each of the first and second plates 3248/3248' carry a linear actuator 3249/3249' provided with a respective vice clamping element 3250/3250' (best seen in Figure 14). It should be pointed out that the clamping element 3250 of the inner plate 3248 incorporates the front abutment 320 (Figure 14).

Based on what has been described above, it can be easily understood that the gripping assembly 1, in its versions in Figures 1-10 and 11-14 is designed to operate with the piles CP of the types described above by simply replacing the hook-shaped coupling members 324 with the vice coupling member 324' or vice versa in order to avoid deforming the longitudinal end LE of the piles CP to be handled.

In the claims, any reference signs placed in brackets should not be interpreted as a limitation of the claim. The word "comprising" does not exclude the presence of other elements or steps in addition to those listed in a claim. Furthermore, the terms "a" or "an" as used in this context are defined as one or more than one. Furthermore, the use of introductory expressions such as "at least one" and "one or more" in the claims should not be interpreted in the sense that the introduction of another claim element identified by using the indefinite article "a" or "an" limits any particular claim in which this claim element appears individually, even when the same claim comprises introductory phrases "one or more" or "at least one" and indefinite articles such as "a" or "an". The same applies to the use of definite articles. Unless stated otherwise, terms such as "first" and "second" are used to arbitrarily distinguish the elements that these terms describe. Therefore, these terms are not necessarily intended to indicate the temporal or other priority of these elements. The mere fact that some measures are set forth in mutually different claims does not indicate that a combination of these measures cannot be used to advantage.

## Claims

1. A gripping assembly (1) for a pile (CP) provided with a longitudinal axis (AL) and delimited axially by a longitudinal end (LE) having a given shape, internally delimited by a first shell (IM) and externally by a second external shell (EM); said assembly (1) comprising a frame (10) provided with a central portion (12) shaped to support a plurality of linear actuators (20) about a central axis (120), where each said linear actuator (20) is provided with a stem (24) carried by said central portion (12) having a radial orientation, and with an armature (22) axially coupled to said stem that terminates with a free end (220) which carries the grasping means (30) (30') designed to radially couple with at least one of said first shell (IM) and said second shell (EM) of said end (LE) of said pile (CP); **characterized in that** said frame (10) has a plurality of arms (14) carried radially by said central portion (12) in a rigid manner; each said arm (14) being provided with a radial guide (140) to which said grasping means (30) (30') are coupled in a freely slidable manner.

2. The assembly according to claim 1, **characterized in that** said grasping means (30) comprise a slide (32) (32') which is provided with a slot (3210) (3210') shape-coupled in a freely slidable manner to said radial guide (140) and is provided with a front abutment (320) for said first shell (IM).

3. The assembly according to claim 2, **characterized in that** each said actuator (20) is designed to hydraulically actuate said armature (22) so that said slide (32) is movable, in use, between a first position in which said front abutment (320) is arranged within said first shell (IM) and free from the first shell (IM) and a second position in which said front abutment (320) is in contact with said first shell (IM).

4. The assembly according to claim 3, **characterized in that** said longitudinal end (LE) has an annular flange (FA) concentric with said longitudinal axis (AL) in such a way that, locally, said first shell (IM) is shaped like a step; said flange (FA) being delimited internally by a cylindrical face (FC) concentric with said longitudinal axis (AL); said flange (FA) being delimited at the top by a first face (FP1) and at the bottom by a second face (FP2) connected by said cylindrical face (FC); said slide (32) comprising a concave coupling member (324) which has a bottom portion (3240) provided with said front abutment (320) and from which a first tooth (3242) and a second tooth (3244) radially extend, facing each other; said first tooth (3242) having internally a first abutment (3242') transversal to said longitudinal axis (AL) and said second tooth (3244) being delimited internally by a second abutment (3244') transversal to said longitudinal axis (AL), said first abutment (3242') and said second abutment (3244') being reciprocally opposing in order to couple, respectively, with said first face (FP1) and said second face (FP2), and being spaced in the direction of said longitudinal axis (AL) at a distance greater than the distance between said first face (FP1) and said second face (FP2).

5. The assembly according to claim 4, **characterized in that** said first tooth (3242') externally has said slot (3210), said first abutment (3242') and said second abutment (3244') being coated with a low friction and pressure deformable material.

6. The assembly according to any one of claims 4-5, **characterized in that** each said actuator (20) is designed to hydraulically actuate said armature (22) so that said slide (32') is movable between a first position in which said second tooth (3244) is arranged within said cylindrical face (FC) and a second position in which said front abutment (320) is in contact with said cylindrical face (FC).

7. The assembly according to claim 3, **characterized in that** said slide (32') comprises a grasping member (324') provided with a bottom portion (3246') in which said slot (3210') is obtained; said grasping member furthermore comprising a first inner plate (3248) and a second outer plate (3248') facing each other, which extend parallel starting from said bottom portion (3246'); said first plate (3248) being coupled to said armature (22); each of said first and second plates (3248) (3248') carrying a linear actuator (3249) (3249') provided with a respective vice clamping element (3250) (3250') to tighten said longitudinal end through the respective first and second shells (IM) (EM); said clamping element (3250) of said inner plate (3248) incorporating said front abutment (320).

8. The assembly according to any one of the preceding claims, **characterized in that** said frame (10) is of a star-shaped type and has the respective said arms (14) uniformly arranged about said central axis (120).

9. The assembly according to any one of the preceding claims, **characterized in that** it comprises a support member (40) coupled to said central portion (12) through the interposition of a bearing (42) coaxial to said central axis (120).

10. The assembly according to any one of the preceding claims, **characterized in that** said arms (14) are at least 6 in number.
